# EUROPEAN PATENT SPECIFICATION

(11) **EP 2 528 163 B1**
(45) Date of publication and mention of the grant of the patent: **16.07.2014**
(21) Application number: 12181100.4
(22) Date of filing: 28.09.2007
(51) Int. Cl.: H01Q 1/24, H01Q 19/00

(54) **Mobile wireless communications device antenna assembly with antenna element and floating director element on flexible substrate and related methods**
Antennenanordnung eines mobilen drahtlosen Kommunikationsgerätes mit Antennenelement und massefreiem Direktorelement auf einem flexiblen Substrat sowie entsprechende Verfahren
Ensemble d'antenne de dispositif de communications sans fil mobile doté d'un élément d'antenne et d'un élément directeur sans masse sur un substrat flexible et procédés correspondants

(43) Date of publication of application: 28.11.2012
(62) Divisional of application: 07117556.6
(73) Proprietor: BlackBerry Limited, Waterloo, ON N2K 0A7 (CA)
(72) Inventor: Qi, Yihong, Waterloo, Ontario N2V 2L3 (CA); Cooke, Adrian Matthew, Waterloo, Ontario N2L 3W8 (CA); Man, Ying Tong, Waterloo, Ontario N2V 2V8 (CA)
(74) Representative: Fennell, Gareth Charles

(56) References cited:
- EP-A- 1 487 051
- WO-A-2004/077610
- WO-A-2005/004277
- IN-A- 1655D EL2 007
- US-A1- 2007 164 910
- US-A1- 2007 188 392

## Description

### Field of the Invention

The present invention relates to the field of communications devices, and, more particularly, to mobile wireless communications devices and antennas therefor and related methods.

### Background of the Invention

Cellular communications systems continue to grow in popularity and have become an integral part of both personal and business communications. Cellular telephones allow users to place and receive voice calls most anywhere they travel. Moreover, as cellular telephone technology has increased, so too has the functionality of cellular devices and the different types of devices available to users. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

Even so, as the functionality of cellular communications devices continues to increase, so too does the demand for smaller devices which are easier and more convenient for users to carry. One challenge this poses for cellular device manufacturers is designing antennas that provide desired operating characteristics within the relatively limited amount of space available for the antenna.

One approach for reducing phone size is to use flip phones having top and bottom housings connected with a hinge. The housings may be closed when the phone is not in use so that it is more compact and easier for a user to carry. One exemplary antenna system for a flip style cellular phone is described in U.S. Patent No. 6,765,536. In particular, the antenna system includes an external antenna element carried on the top of the lower housing, and a parasitic element carried by the top housing so that when the phone is flipped open the parasitic element is in close proximity to the antenna element. A tuning circuit carried by the lower housing is electrically coupled to the parasitic element. The tuning circuit is variable to adjust the parasitic load on the antenna element to provide variable operating frequencies and bandwidths for the phone.

External cell phone antennas are advantageous in that they are spaced apart from the user's head, which makes it easier for phone manufacturers to comply with applicable specific absorption rate (SAR) requirements, for example. This is because the farther the radiating element of the cell phone antenna system is from the user, the less intense the radiation exposure to the user. Yet, many users prefer internal antennas over external antennas, as external antennas are prone to catch on objects and become damaged, for example. Yet, with the ever increasing trend towards smaller cell phone sizes, for a relatively small phone having an internal antenna, this may place the antenna in relatively close proximity to the user's ear, which may make complying with applicable SAR and/or hearing aid compatibility (HAC) requirements potentially difficult for manufacturers.

One exemplary mobile phone configuration that attempts to address radiation concerns from an internal antenna is set forth in PCT Publication No. WO/2004/021511 A2. The device includes a casing including a first in-built driven antenna element extending a length along a longest side of the casing. Either the portable communication device or the case includes at least one passive beam directive element distanced from and generally extending along at least most of the same length as the first in-built driven antenna element. Because of this, electromagnetic radiation generated by the first in-built driven antenna element is enhanced in a direction away from a side of the casing intended to be facing a user.

Another exemplary mobile phone configuration having an in-built antenna and director elements to shape the antenna beam away from the user is known from IN DEL200701655A1 and EP 1895617 A1.

Despite the existence of such configurations, further improvements may be desirable in certain applications, particularly where the form factor of the device housing does not provide adequate space for such arrangements.

### Brief Description of the Drawings

FIG. 1 is a perspective view of a mobile wireless communications device in accordance with one aspect adjacent a user's head.

FIG. 2 is a side cutaway view of an embodiment of the mobile wireless communications device of FIG. 1.

FIG. 3 is a rear view of an embodiment of the mobile wireless communications device of FIG. 1 with a battery cover removed.

FIG. 4 is 2D plan view of an embodiment of the antenna assembly of the mobile wireless communications device of FIG. 1.

FIG. 5 is a 2D plan view of an alternative embodiment of the antenna assembly of FIG. 4.

FIG. 6 is a flow diagram illustrating a method for making a mobile wireless communications device in accordance with one aspect.

FIG. 7 is a schematic block diagram illustrating exemplary components that may be included in the wireless communications device of FIG. 1.

### Detailed Description of the Preferred Embodiments

The present description is made with reference to the accompanying drawings, in which preferred embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements in different embodiments.

A mobile wireless communications device is disclosed according to indepent claim 1. Optional features are set out in the dependent claims.

A related method for making a mobile wireless communications device is also provided as set out in independent claim 7.

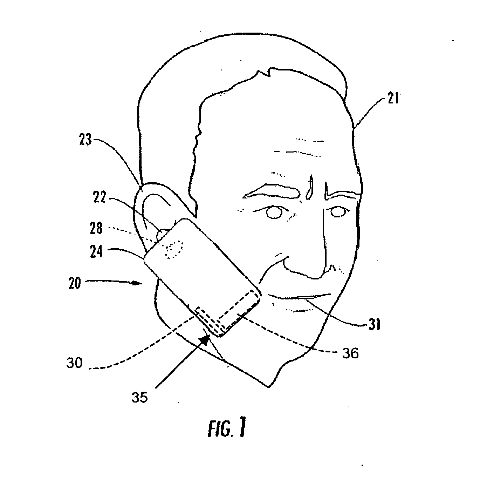

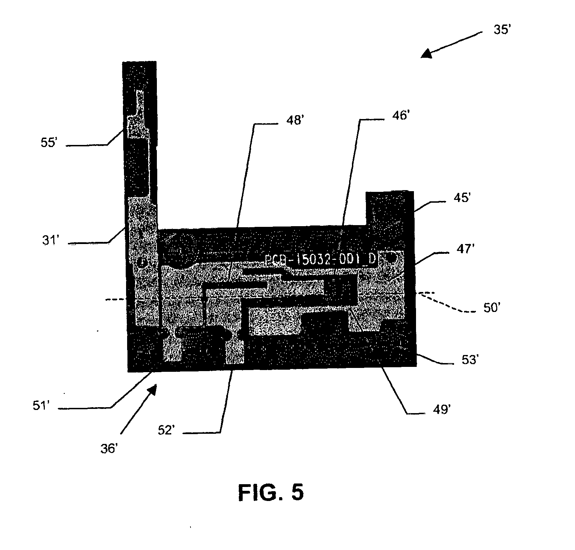

Referring initially to FIGS. 1 through 5, a mobile wireless communications device **20,** such as a cellular telephone, is for a user **21.** In some applications, the user **21** may be wearing an electronic hearing aid **22** in an ear **23** of the user. In particular, the device **20** may advantageously provide desired hearing aid compatibility (HAC) for users with hearing aids in some implementations, as will be discussed further below, but need not be used with hearing aids in all embodiments.

The device **20** illustratively includes a portable housing **24** and an audio output transducer **28** (e.g., a speaker) carried by the housing and accessible to the electronic hearing aid **22** of the user **21** adjacent the top of the housing as shown. An audio input transducer **32** (e.g., microphone) is also carried by the housing **24** and accessible to a mouth **31** of the user **21** adjacent the bottom of the housing. Although described herein with reference to a cellular device, it should be noted that the present disclosure may be applicable to other wireless communications devices such as wireless LAN devices, etc.

The cellular telephone **20** further illustratively includes a printed circuit board (PCB) **37** carried by the housing **24** and wireless communications circuitry **38** (e.g., cellular transceiver, etc.) carried by the PCB. In the illustrated embodiment, the wireless communications circuitry **38** is carried on the back on the PCB **37,** but in other embodiments it may be carried on the front side, for example. A ground plane **39** is illustratively carried on a front surface of the PCB **37,** although the ground plane may be located elsewhere in other embodiments, as will be appreciated by those skilled in the art. The device **20** may further include other components carried by the housing **24** and/or PCB **37** such as a display, battery, keypad, processing circuitry, etc., as will be discussed further below.

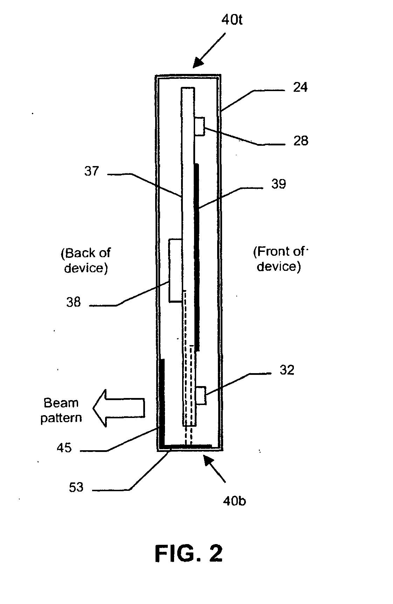

The portable housing **24** has a top **40t,** bottom **40b,** and left and right sides **41a, 41b.** The antenna assembly **35** is illustratively positioned adjacent the bottom **40b** of the portable housing **24** and includes a flexible substrate **45,** such as a semi-transparent dielectric ribbon, as well as an electrically conductive antenna element **36** on the flexible substrate and connected to the wireless communications circuitry **38** and the ground plane **39** (FIG. 2). By way of example, the conductive antenna element **36** may be a printed conductor which is advantageously printed on the flexible substrate, which in turn is attached to the portable housing **24** by a suitable adhesive, etc. Also, the antenna element **36** may be connected to the circuitry **38** and ground plane **39** by a flex conductor, for example, or other suitable connectors.

In the illustrated example, the antenna assembly **35** is secured to the housing **24** underneath where a battery cover (not shown) is attached to the back of the housing. That is, when the battery cover is connected to the housing **24,** it covers the antenna assembly **35** so it is not visible to a user, as will be appreciated by those skilled in the art. However, it should be noted that other placements and/or approaches for securing the antenna assembly **35** to the housing may also be used. The structure of the antenna element **36** is discussed further below.

The antenna element **36** may take the form of one or more single or multi-feed point antenna elements (monopole, inverted F, etc.), for example, as will be appreciated by those skilled in the art. In the illustrated embodiment, the antenna element **36** is a multi-band inverted F antenna which advantageously covers GSM 850/900/1800/1900 bands, although other bands (e.g., UMTS 2100 MHz, WLAN 2.45/5.5 GHz, etc.) may also be used by appropriate adjustment of electrical length, etc., as will be appreciated by those skilled in the art.

The antenna element **36** overall has a generally rectangular shape with a plurality of slotted openings **48, 49** therein defining first and second loop portions **46, 47.** The first loop portion **46** is for a first frequency range, which in the present example is the lower GSM 850/900 frequency range. The second loop portion **47** extends laterally outward from the first loop portion **46,** and is for a second frequency range different than the first frequency range. In the exemplary embodiment, the second loop portion **47** is for the upper GSM 1800/1900 frequency range.

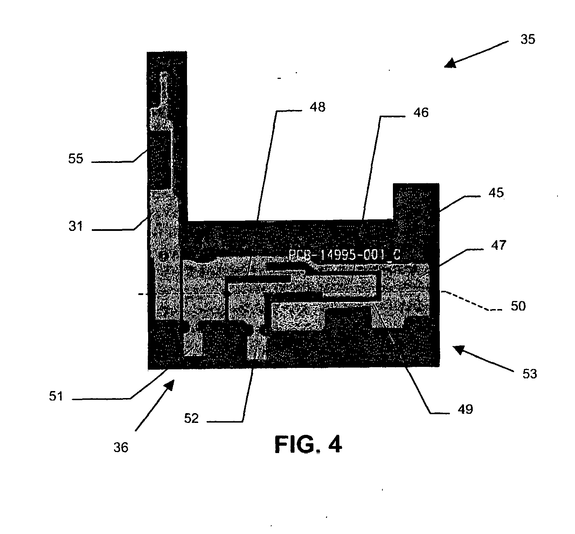

The antenna element **36** further illustratively includes a first feed point **51** that is electrically connected to the wireless communications circuitry **38,** and a second feed point **52** that is electrically connected to the ground plane **39.** Both of the first and second feed points **51, 52** are coupled or connected to the first loop portion **46,** as seen in FIG. 4. In the exemplary embodiment, the flexible substrate **45** has a wrap-around portion **53,** which is the portion below the dashed line **50** (FIG. 4). More particularly, the wrap-around portion **35** wraps around or underneath the bottom **40b** of the portable housing **24.** Portions of the antenna element **36,** namely the first and second feed points **51, 52,** and lower portions of the first and second loop portions **46, 47,** are on the wrap-around portion **53.**

The folded, overlapping configuration of the first and second loops **46, 47** advantageously provides a relatively compact antenna design compared with an equivalent traditional monopole or inverted F antenna. This may advantageously provide a smaller footprint, which results in a greater surface integration area savings. By way of example, in the illustrated embodiment the antenna element **36** has a generally rectangular footprint of about 1.5 cm tall by 4 cm wide, although other sizes and dimensions may be used in different embodiments. The lengths and shapes of the first and second loop portions **46, 47** may advantageously be chosen to provide an effective electrical length of λ/4 of the respective operating frequencies of the respective loop , as will be appreciated by those skilled in the art.

In the present example, the antenna element **36** is positioned adjacent the bottom **40b** of the PCB **37** and therefore the bottom of the housing **24** (i.e., adjacent where the input transducer **32** is). This advantageously helps reduce coupling to the electronic hearing aid **22** of the user **21** with respect to traditional top-mounted, internal cellular phone antennas. This is because the electronic hearing aid **22** of the user **21** is advantageously further separated from the antenna element **36** when the cellular telephone **20** is held adjacent the user's ear **23** than would otherwise be the case with a typical top-mounted, internal cellular telephone antenna, for example. Moreover, this antenna placement also helps space the antenna element **36** farther apart from the user's brain, which in turn helps to reduce the SAR of the device **20** again with respect to a traditional top-mounted, internal cellular phone antenna. However, it should be noted that a top-mounted or other antenna placement may be used in some embodiments.

Nonetheless, if the portable housing **24** has a relatively small form factor or footprint for user convenience, this means that the antenna **35** may still be positioned relatively close to the user's ear **23,** thus potentially elevating the SAR or coupling to the hearing aid **22** to unacceptable levels. Moreover, close proximity of the antenna element **36** to a user's head may also cause interference with a typical cellular antenna radiation pattern, for example.

As such, the antenna assembly **35** further advantageously includes a floating, electrically conductive director element **30** on the flexible substrate **45** for directing a beam pattern of the antenna element **36.** More particularly, in the illustrated configuration the director element **30** directs the beam pattern of the antenna element **36** away from the user, as seen in FIG. 2. This not only helps to prevent interference from blockage of the beam pattern by the user's head, but is also advantageously directs RF energy away from the user's head so that there is less coupling with the user's hearing aid **22** and/or potentially reduced device SAR, as will be appreciated by those skilled in the art. This may also advantageously help with head phantom TRP measurements, for example, as will be appreciated by those skilled in the art.

In the illustrated embodiment the director element **30** has a generally rectangular shape with a lower end laterally adjacent the antenna element **36,** and a cut-out **55** adjacent an upper end thereof (FIG. 4). More particularly, the director element **30** illustratively has an elongate shape extending vertically outwardly from the antenna element **36,** as seen in FIG. 4. That is, the director element **30** extends vertically along the left side **41a** of the portable housing **24** from the bottom **40b** thereof toward the top **40t.** However, in other embodiments the director element **30** may advantageously be positioned on the right side **41b** of the housing, or elsewhere.

One or more cut-outs **55** may be used to accommodate holes, etc. in the portable housing **24.** However, such cut-outs or narrowed portions of the director element **30** may also serve to change the allowable effective length of the director element to lengths other than λ/4 of a given operating frequency (e.g., λ/2, etc.), which may provide more flexibility in layout to accommodate different embodiments where different amounts of portable housing surface area **24** are available.

Generally speaking, it is desirable to match the director element **30** to the higher operating frequency, which in the present example is the GSM 1800/1900 band, but it may be matched to the lower frequency band(s) in other embodiments. In the illustrated example, the director element **30** has an overall length of about 4 cm, with a width of about 4 mm at the bottom and about .4 mm in the cut-out **55,** although other dimensions are also possible in other dimensions.

In the present embodiment, a lower portion of the director element **31** is on the wrap-around portion **53** of the flexible substrate **45.** The flexible substrate **45** advantageously facilitates the placement of the antenna element **36** (or multiple elements in other embodiments) and director element **30** during manufacturing, which may avoid the potential difficulty of printing conductive traces on portions of the housing **24,** for example. Moreover, the flexible substrate **45** may be relatively easily patterned to fit numerous styles and/or sizes of housings **24.** Furthermore, the flexible substrate **45** allows the antenna element **36** to be placed in locations other than on the PCB **37,** so that the PCB surface area can be used for other elements. The flexible substrate also provides for the relatively easy wrapping around the bottom **40b,** etc., of the portable housing **24.** This advantageously takes advantage of potentially otherwise unused housing **24** surface area so that less of the backside of the housing, which may need to be used for battery slots, camera lenses, etc., is required.

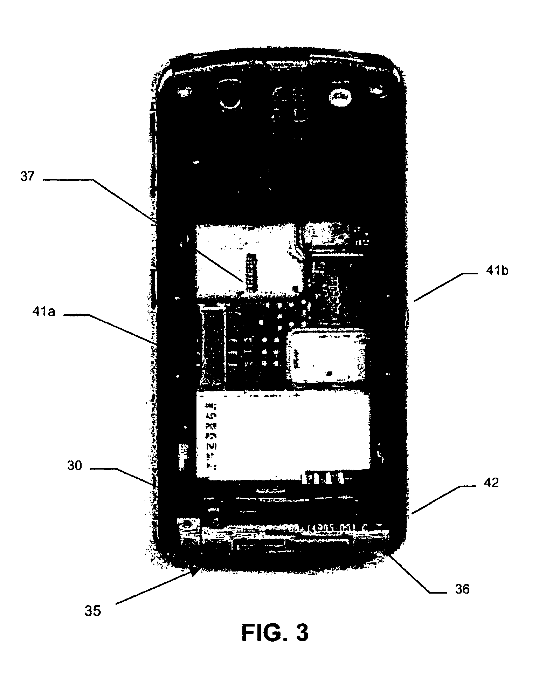

In the embodiment illustrated in FIG. 3, the upper portions of the director element **30** are covered with a cover layer, which advantageously helps protect the director element **30** so that it is not damaged or altered such that SAR and/or HAC performance is potentially degraded. By way of example, the cover layer may be a dielectric tape layer, etc. One may also advantageously conceal the director element, for example, by making the cover layer the same color as a color of the portable housing **24,** as will be appreciated by those skilled in the art. It will also be appreciated that all or portions of the antenna element **36** may also be covered with a cover layer in certain embodiments, if desired.

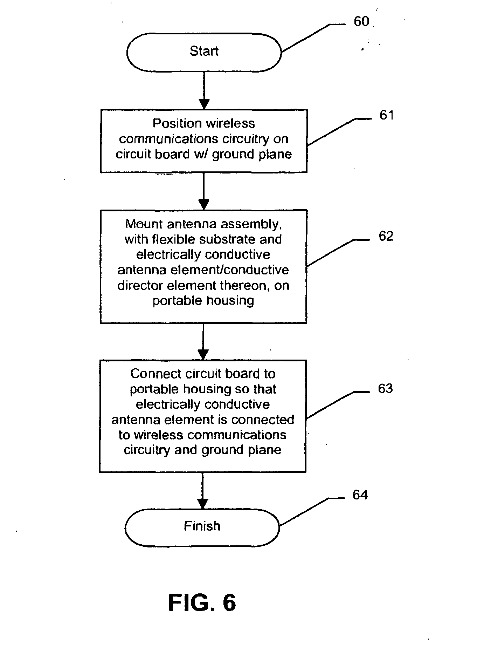

An alternative embodiment of the antenna assembly **35'** is shown in FIG. 6. This embodiment makes use of different slot sizes and loop widths to provide desired tuning in a different housing configuration, although the operating frequencies associated with the first and second loops **46, 47** are the same as those described above.

A related method for making a mobile wireless communications device **20** is now briefly described with reference to FIG. 6. Beginning at Block **60,** the method illustratively includes positioning wireless communications circuitry **38** on a circuit board **37** having a ground plane **39** thereon, at Block **61,** and mounting an antenna assembly **35,** such as the one briefly described above, on a portable housing **24** (Block **62).** The method may further include connecting the circuit board **37** to the portable housing **24** so that the electrically conductive antenna element **36** is connected to the wireless communications circuitry **38** and the ground plane **39,** at Block **63,** thus concluding the illustrated method (Block **64).**

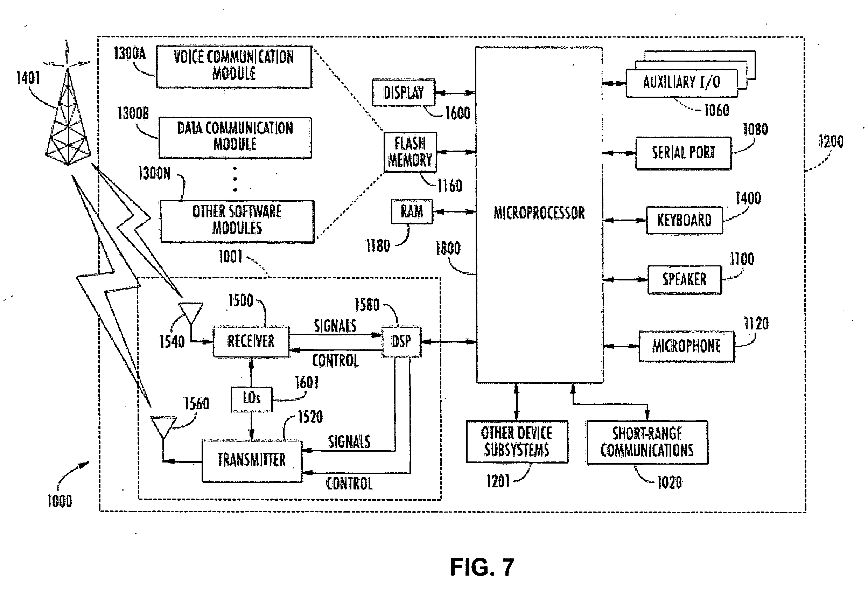

Exemplary components that may be used in the device **20** will now be described in the following example with reference to a wireless communications device **1000** shown in FIG. 7. The device **1000** illustratively includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 7. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device 1000 may also be compliant with other communications standards such as 3GSM, 3GPP, UMTS, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device 1000 and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (20) comprising:
a portable housing (24) having a top (40t) and a bottom (40b);
a circuit board (37) carried by said portable housing (24);
wireless communications circuitry (38) carried by said circuit board (37); and
an antenna assembly (35) carried by said housing (24) and comprising
a flexible substrate (45) having a wrap-around portion (53) adjacent the bottom (40b) of said housing (24),
an electrically conductive antenna element (36) on said flexible substrate (45) and connected to said wireless communications circuitry (38), said electrically conductive antenna element having a plurality of slotted openings (48, 49) therein defining first and second loops (46, 47) operating at respective first and second different frequency ranges, portions of the first and second loops being on said wrap-around portion, and
a floating, electrically conductive director element (30) on said flexible substrate (45) and on said wrap-around portion for directing a beam pattern of said antenna element (36).

2. The mobile wireless communications device (20) of Claim 1 wherein said electrically conductive antenna element (36) further comprises a first feed point (51) for said wireless communications circuitry (38) and a second feed point (52) both coupled to said first loop (46).

3. The mobile wireless communications device (20) of Claim 1 wherein said second loop (47) laterally extends outwardly from said first loop (46).

4. The mobile wireless communications device (20) of Claim 1 wherein said electrically conductive antenna element (36) has a generally rectangular shape with the plurality of slotted openings (48, 49) therein.

5. The mobile wireless communications device (20) of Claim 1 wherein said floating, electrically conductive director element (30) has an elongate shape extending outwardly from said electrically conductive antenna element (36).

6. The mobile wireless communications device (20) of Claim 1 wherein said floating, electrically conductive director element (30) has a generally rectangular shape with a lower end laterally adjacent said electrically conductive antenna element (36) and a cut-out (55) adjacent an upper end thereof.

7. A method for making a mobile wireless communications device (20) comprising:
positioning wireless communications circuitry (38) on a circuit board (37);
mounting an antenna assembly (35) on a portable housing (24) having a top (40t) and a bottom (40b), the antenna assembly (35) comprising
a flexible substrate (45) having wrap-around portion (53) adjacent the bottom (40b) of the housing (24),
an electrically conductive antenna element (36) on the flexible substrate (45), the electrically conductive antenna element having a plurality of slotted openings (48, 49) therein defining first and second loops (46, 47) operating at respective first and second different frequency ranges, portions of the first and second loops being on the wrap-around portion, and
a floating, electrically conductive director element (30) on the flexible substrate (45) and on the wrap-around portion for directing a beam pattern of the antenna element (36); and
connecting the circuit board (37) to the portable housing (24) so that the electrically conductive antenna element (36) is connected to the wireless communications circuitry (38).

8. The method of Claim 7 wherein the second loop (47) laterally extends outwardly from the first loop (46).

9. The method of Claim 7 wherein the floating, electrically conductive director element (30) has an elongate shape extending outwardly from the electrically conductive antenna element (36).

## Patentansprüche

1. Mobile drahtlose Kommunikationsvorrichtung (20), die aufweist:
ein tragbares Gehäuse (24) mit einer Oberseite (40t) und einer Unterseite (40b);
eine Leiterplatte (37), die von dem tragbaren Gehäuse (24) getragen wird;
Drahtloskommunikationsschaltungen (38), die von der Leiterplatte (37) getragen werden; und
eine Antennen-Baugruppe (35), die von dem Gehäuse (24) getragen wird und aufweist
ein flexibles Substrat (45) mit einem abgewinkelten Teil (53) angrenzend an die Unterseite (40b) des Gehäuses (24),
ein elektrisch leitendes Antennenelement (36) auf dem flexiblen Substrat (45) und mit den Drahtloskommunikationsschaltungen (38) verbunden, wobei das elektrisch leitende Antennenelement eine Vielzahl von Schlitzöffnungen (48, 49) darin hat, die erste und zweite Schleifen (46, 47) definieren, die an jeweiligen ersten und zweiten verschiedenen Frequenzbereichen arbeiten, wobei Teile der ersten und zweiten Schleifen auf dem abgewinkelten Teil sind, und
ein potenzialfreies elektrisch leitendes Direktorelement (30) auf dem flexiblen Substrat (45) und auf dem abgewinkelten Teil zum Richten eines Strahlmusters des Antennenelements (36).

2. Die mobile drahtlose Kommunikationsvorrichtung (20) gemäß Anspruch 1, wobei das elektrisch leitende Antennenelement (36) weiter einen ersten Zufuhrpunkt (51) für die Drahtloskommunikationsschaltungen (38) und einen zweiten Zufuhrpunkt (52) aufweist, die beide mit der ersten Schleife (46) gekoppelt sind.

3. Die mobile drahtlose Kommunikationsvorrichtung (20) gemäß Anspruch 1, wobei sich die zweite Schleife (47) lateral nach außen von der ersten Schleife (46) erstreckt.

4. Die mobile drahtlose Kommunikationsvorrichtung (20) gemäß Anspruch 1, wobei das elektrisch leitende Antennenelement (36) eine allgemein rechteckige Form mit der Vielzahl von Schlitzöffnungen (48, 49) darin hat.

5. Die mobile drahtlose Kommunikationsvorrichtung (20) gemäß Anspruch 1, wobei das potenzialfreie elektrisch leitende Direktorelement (30) eine längliche Form hat, die sich von dem elektrisch leitenden Antennenelement (36) nach außen erstreckt.

6. Die mobile drahtlose Kommunikationsvorrichtung (20) gemäß Anspruch 1, wobei das potenzialfreie elektrisch leitende Direktorelement (30) eine allgemein rechteckige Form hat mit einem unteren Ende lateral angrenzend an das elektrisch leitende Antennenelement (36) und einer Aussparung (55) angrenzend an ein oberes Ende davon.

7. Verfahren zur Herstellung einer mobilen drahtlosen
Kommunikationsvorrichtung (20), das aufweist:
Positionieren von Drahtloskommunikationsschaltungen (38) auf einer Leiterplatte (37);
Anbringen einer Antennen-Baugruppe (35) auf einem tragbaren Gehäuse (24) mit einer Oberseite (40t) und einer Unterseite (40b), wobei die Antennen-Baugruppe (35) aufweist
ein flexibles Substrat (45) mit einem abgewinkelten Teil (53) angrenzend an die Unterseite (40b) des Gehäuses (24),
ein elektrisch leitendes Antennenelement (36) auf dem flexiblen Substrat (45), wobei das elektrisch leitende Antennenelement eine Vielzahl von Schlitzöffnungen (48, 49) darin hat, die erste und zweite Schleifen (46, 47) definieren, die an jeweiligen ersten und zweiten verschiedenen Frequenzbereichen arbeiten, wobei Teile der ersten und zweiten Schleifen auf dem abgewinkelten Teil sind, und ein potenzialfreies elektrisch leitendes Direktorelement (30) auf dem flexiblen Substrat (45) und auf dem abgewinkelten Teil zum Richten eines Strahlmusters des Antennenelements (36); und Verbinden der Leiterplatte (37) mit dem tragbaren Gehäuse (24), so dass das elektrisch leitende Antennenelement (36) mit den Drahtloskommunikationsschaltungen (38) verbunden ist.

8. Das Verfahren gemäß Anspruch 7, wobei sich die zweite Schleife (47) lateral nach außen von der ersten Schleife (46) erstreckt.

9. Das Verfahren gemäß Anspruch 7, wobei das potenzialfreie elektrisch leitende Direktorelement (30) eine längliche Form hat, die sich von dem elektrisch leitenden Antennenelement (36) nach außen erstreckt.

## Revendications

1. Dispositif de communication mobile sans fil (20) comprenant :
un boîtier portatif (24) comportant un haut (40t) et un bas (40b) ;
une carte de circuits (37) supportée par ledit boîtier portatif (24) ;
une circuiterie de communication sans fil (38) supportée par ladite carte de circuits (37) ; et
un ensemble d'antenne (35) supporté par ledit boîtier (24) et comprenant :
un substrat flexible (45) ayant une partie repliée (53) adjacente au bas (40b) dudit boîtier (24) ;
un élément d'antenne électriquement conducteur (36) placé sur ledit substrat flexible (45) et connecté à ladite circuiterie de communication sans fil (38), ledit élément d'antenne électriquement conducteur possédant une pluralité d'ouvertures en encoche (48, 49) qui y sont ménagées et qui définissent une première et une seconde boucle (46, 47) fonctionnant sur une première et une seconde plage de fréquences différentes, respectivement, des parties desdites première et seconde boucles se trouvant sur ladite partie repliée ; et
un élément directeur flottant électriquement conducteur (30) placé sur ledit substrat flexible (45) et sur ladite partie repliée et destiné à envoyer un motif de faisceau vers ledit élément d'antenne (36).

2. Dispositif de communication mobile sans fil (20) selon la revendication 1, dans lequel ledit élément d'antenne électriquement conducteur (36) comprend en outre un premier point d'alimentation (51) pour ladite circuiterie de communication sans fil (38) et un second point d'alimentation (32), tous deux couplés à ladite première boucle (46).

3. Dispositif de communication mobile sans fil (20) selon la revendication 1, dans lequel ladite seconde boucle (47) s'étend latéralement vers l'extérieur à partir de ladite première boucle (46).

4. Dispositif de communication mobile sans fil (20) selon la revendication 1, dans lequel ledit élément d'antenne électriquement conducteur (36) possède une forme généralement rectangulaire avec la pluralité d'ouvertures en encoche (48, 49) qui y sont ménagées.

5. Dispositif de communication mobile sans fil (20) selon la revendication 1, dans lequel ledit élément directeur flottant électriquement conducteur (30) possède une forme allongée qui s'étend vers l'extérieur à partir dudit élément d'antenne électriquement conducteur (36).

6. Dispositif de communication mobile sans fil (20) selon la revendication 1, dans lequel ledit élément directeur flottant électriquement conducteur (30) possède une forme généralement rectangulaire avec une extrémité inférieure adjacente audit élément d'antenne électriquement conducteur (36) et une découpe (55) adjacente à une extrémité supérieure de celui-ci.

7. Procédé de fabrication d'un dispositif de communication mobile sans fil (20), comprenant les étapes consistant à :
positionner une circuiterie de communication sans fil (38) sur une carte de circuits (37) ;
monter un ensemble d'antenne (35) sur un boîtier portatif (24) possédant un haut (40t) et un bas (40b), l'élément d'antenne (35) comprenant :
un substrat flexible (45) ayant une partie repliée (53) adjacente au bas (40b) du boîtier (24) ;
un élément d'antenne électriquement conducteur (36) placé sur ledit substrat flexible (45), l'élément d'antenne électriquement conducteur possédant une pluralité d'ouvertures en encoche (48, 49) qui y sont ménagées et qui définissent une première et une seconde boucle (46, 47) fonctionnant sur une première et une seconde plage de fréquences différentes, respectivement, des parties des première et seconde boucles se trouvant sur la partie repliée ; et
un élément directeur flottant électriquement conducteur (30) placé sur le substrat flexible (45) et sur la partie repliée et destiné à envoyer un motif de faisceau vers ledit élément d'antenne (36) ; et
connecter la carte de circuits (37) au boîtier portatif (24) afin que l'élément d'antenne électriquement conducteur (36) soit connecté à la circuiterie de communication sans fil (38).

8. Procédé selon la revendication 7, dans lequel la seconde boucle (47) s'étend latéralement vers l'extérieur à partir de la première boucle (46).

9. Procédé selon la revendication 7, dans lequel l'élément directeur flottant électriquement conducteur (30) possède une forme allongée qui s'étend vers l'extérieur à partir dudit élément d'antenne électriquement conducteur (36).
